# FASCICULE DE BREVET EUROPEEN

(11) **EP 2 957 741 B1**
(45) Date de publication et mention de la délivrance du brevet: **28.12.2016**
(21) Numéro de dépôt: 15169813.1
(22) Date de dépôt: 29.05.2015
(51) Int. Cl.: F01N 5/02, F01K 23/06, F01K 23/10, F01K 23/14

(54) **DISPOSITIF DE RÉCUPÉRATION D'ÉNERGIE À BOUCLE DE RANKINE**
VORRICHTUNG ZUR ENERGIERÜCKGEWINNUNG ÜBER EINEN RANKINE-KREISPROZESS
DEVICE FOR RECOVERING ENERGY WITH RANKINE LOOP

(30) Priorité: 19.06.2014 FR 1455621
(43) Date de publication de la demande: 23.12.2015
(73) Titulaire: PEUGEOT CITROËN AUTOMOBILES SA, 78140 Vélizy-Villacoublay (FR)
(72) Inventeur: DINY, Mouad, 92600 ASNIERES SUR SEINE (FR); LEGROS, Arnaud, 6760 VIRTON (BE)

(56) Documents cités:
- WO-A1-2013/047148
- WO-A2-2006/138459
- WO-A2-2012/156175
- DE-A1-102010 042 405
- DE-A1-102011 076 405

## Description

### Domaine technique de l'invention

La présente invention se rapporte à un dispositif de récupération d'énergie à boucle de Rankine. L'invention concerne aussi un organe de détente pour un dispositif de récupération d'énergie à boucle de Rankine et un véhicule équipé d'un tel dispositif.

Pour limiter la consommation de carburant des moteurs à combustion interne équipant les véhicules automobiles, de nombreuses recherches visent à augmenter leur rendement énergétique. Pour en accroître le rendement global, il est notamment connu de récupérer une partie de l'énergie perdue dans les gaz d'échappement produits par le moteur à combustion interne au moyen d'un dispositif de récupération d'énergie à boucle de Rankine couplé à la ligne d'échappement. Un tel dispositif est décrit par exemple dans les documents FR298817 et DE102010042405.

Cependant dans certaines situations de vie du véhicule, par exemple lors d'un démarrage du moteur à froid, ou d'un redémarrage du moteur, la puissance disponible à la ligne d'échappement peut être insuffisante.

On connait encore du document US201200331141 un organe de détente de type spiro-orbital pour dispositif de récupération d'énergie par boucle de Rankine comprenant une vanne commandé électriquement, permettant de dériver le fluide travail entrant dans l'organe de détente de sorte à ce qu'il ne passe pas par les spires. Cependant la commande électrique est fixée au carter de l'organe de détente ce qui peut poser des problèmes d'encombrement.

Par conséquent, le problème à la base de l'invention est de s'affranchir des problèmes de l'art antérieur et de proposer un dispositif de récupération d'énergie à l'échappement adapté pour les situations de vie où la puissance à la ligne d'échappement peut être insuffisante, tout en restant compact.

Pour atteindre cet objectif, il est prévu selon l'invention un dispositif de récupération d'énergie à boucle de Rankine comprenant :
- une boucle d'échange thermique dans laquelle circule un fluide de travail,
- un organe de détente disposé dans la boucle apte à transformer de l'énergie provenant de la détente du fluide en énergie mécanique,
- un circuit de dérivation de fluide reliant l'amont de l'organe de détente à l'aval de l'organe de détente,
- des moyens de transmission de l'énergie mécanique produite par l'organe de détente, ce dispositif étant caractérisé en ce qu'il comprend de plus :
- des moyens de blocage des moyens de transmission,
- des moyens de commande des moyens de blocage,
- un clapet anti-retour passif taré à un effort de tarage déterminé et disposé dans le circuit de dérivation,
- Les moyens de commande et le clapet étant conçus pour coopérer de sorte que :
   - lorsque la puissance disponible à la source chaude est inférieure à un seuil de puissance déterminé, les moyens de commande bloquent les moyens de transmission, afin que la pression du fluide dans la boucle augmente jusqu'à exercer sur le clapet un effort supérieur à l'effort de tarage déterminé, le clapet s'ouvrant alors pour autoriser passage du fluide dans le circuit) de dérivation.
   - lorsque la puissance disponible à la source chaude est supérieure au seuil de puissance déterminé, les moyens de commande ne bloquent pas les moyens de transmission, afin que la pression du fluide dans la boucle diminue jusqu'à exercer sur le clapet un effort du fluide sur le clapet inférieur à l'effort de tarage, le clapet se fermant alors pour interdire le passage du fluide dans le circuit de dérivation.

De préférence, les moyens de commande comprennent des moyens de détermination d'une information représentative de la puissance disponible à la source chaude et des moyens de pilotage adaptés à piloter les moyens de blocage en fonction cette information représentative acquise.

De préférence, le dispositif de l'invention comprend une génératrice électrique coopérant avec les moyens de transmission pour convertir l'énergie mécanique produite par l'organe de détente en énergie électrique, la génératrice électrique faisant office de moyens de blocage.

Dans une variante, le circuit de dérivation est distinct de l'organe de détente.

Dans une autre variante, le circuit de dérivation est intégré à l'organe de détente.

L'invention concerne aussi un organe de détente pour un dispositif de récupération d'énergie à boucle de Rankine dans sa variante où le circuit de dérivation est intégré à l'organe de détente, l'organe de détente comprenant un carter, ce carter comprenant une entrée et une sortie de fluide de travail, cet organe de détente étant caractérisé en ce que le carter comprend :
- un passage interne aménagé dans l'épaisseur du carter et reliant l'entrée à la sortie de fluide de travail, destiné à faire office de circuit de dérivation,
- le clapet anti-retour passif taré à un effort de tarage déterminé étant disposé dans le passage interne de sorte que :
   > lorsque l'effort du fluide sur le clapet est inférieur à l'effort de tarage, le clapet est fermé pour interdire le passage du fluide dans le passage interne,
   > lorsque l'effort du fluide sur le clapet est supérieur à l'effort de tarage, le clapet est ouvert pour autoriser passage du fluide dans le passage interne.

De préférence, le passage interne comprend un matériau à changement de phase.

De préférence encore, l'organe de détente est un organe de détente de type spiro-orbital.

L'invention concerne encore un véhicule automobile comprenant un moteur à combustion interne relié à une ligne d'échappement, caractérisé en ce qu'il comprend un dispositif de récupération d'énergie à boucle de Rankine de l'invention en contact thermique avec la ligne d'échappement comme source chaude.

L'invention concerne encore un véhicule automobile comprenant un moteur à combustion interne relié à une ligne d'échappement, caractérisé en ce qu'il comprend un dispositif de récupération d'énergie à boucle de Rankine dans sa variante où le circuit de dérivation est intégré à l'organe de détente accouplé à la ligne d'échappement comme source chaude et comprenant un organe de détente de l'invention.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'une boucle d'échange thermique de la présente invention équipant un moteur à combustion pour véhicule automobile.
- La figure 2 est une représentation schématique d'un organe de détente selon l'invention.
- La figure 3 est un agrandissement de la zone A délimitée à la figure 2

### Description détaillée

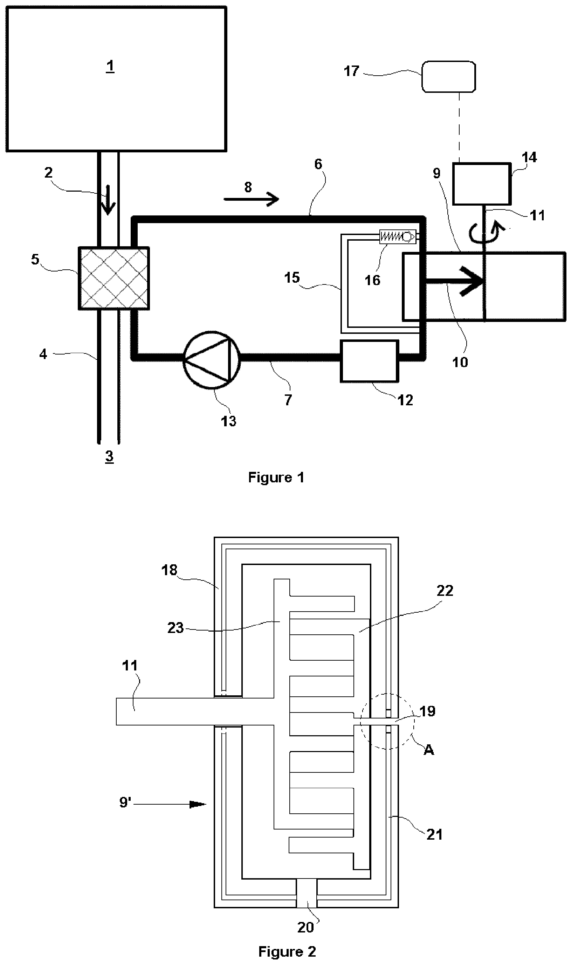

Sur la figure 1, un véhicule automobile est équipé d'un moteur à combustion interne 1 pour sa mise en mouvement. Le moteur à combustion interne 1 produit des gaz d'échappement 2 qui sont évacués vers un environnement extérieur 3 par l'intermédiaire d'une ligne d'échappement 4.

Il est prévu un dispositif de récupération d'énergie à boucle thermodynamique de Rankine en contact thermique avec la ligne d'échappement 4 comme source chaude.

Plus précisément, le dispositif de récupération d'énergie à boucle de Rankine comprend une boucle d'échange thermique 6 à l'intérieur de laquelle circule un fluide 7 de travail. Un échangeur thermique 5 est disposé dans la boucle d'échange thermique 6, en contact thermique avec la ligne d'échappement 4 comme source chaude de sorte à capter les calories véhiculées par les gaz d'échappement 2 pour les transférer au fluide 7 de travail.

L'échangeur thermique 5 destiné à transférer la chaleur de la ligne d'échappement 4 vers le fluide 7 de travail constitue préférentiellement un évaporateur pour le fluide 7 de travail, de telle sorte que ce dernier passe d'un état liquide à un état vapeur à l'intérieur de l'échangeur thermique 5.

A partir de l'échangeur thermique 5, selon un sens d'écoulement 8 du fluide 7 à l'intérieur de la boucle d'échange thermique 6, le dispositif de récupération d'énergie comprend encore :
- un organe de détente spiro-orbital 9 apte à transformer de l'énergie provenant de la détente du fluide 7 en énergie mécanique. A l'intérieur de l'organe de détente 9 le fluide 7 subit une détente pour transmettre une puissance mécanique 10 à des moyens de transmission, ici un arbre excentrique 11 mobile en rotation que comporte l'organe de détente spiro-orbital 9.
- un condenseur 12 à l'intérieur duquel le premier fluide 7 se condense et
- une pompe 13 pour mettre en circulation le fluide 7 à l'intérieur de la boucle d'échange thermique 6.

Il en résulte que le fluide 7 est à l'état de vapeur haute-pression entre l'échangeur thermique 5 et l'organe de détente spiro-orbital 9, que le fluide 7 est à l'état de vapeur basse-pression entre l'organe de détente spiro-orbital 9 et le condenseur 12, que le fluide 7 est à l'état de liquide basse pression entre le condenseur 12 et la pompe 13, et que le fluide 7 est à l'état de liquide haute-pression entre la pompe 13 et l'échangeur thermique 5. Le fluide 7 de travail peut par exemple être de l'eau.

Dans ce mode de réalisation, le dispositif de récupération d'énergie comprend encore :
- un circuit 15 de dérivation de fluide reliant l'amont de l'organe de détente 9 à l'aval de l'organe de détente 9. L'amont et l'aval sont ici définis relativement au sens 8 de circulation du fluide 7 dans la boucle d'échange thermique.
- un clapet 16 anti-retour disposé sur le circuit 15 de dérivation. Le clapet 16 anti-retour est taré à un effort de tarage déterminé de sorte que, d'une part, lorsque l'effort du fluide 7 sur le clapet est inférieur à l'effort de tarage, le clapet est fermé, autrement dit il interdit le passage du fluide 7 dans le circuit 15 de dérivation et d'autre part lorsque l'effort du fluide 7 sur le clapet 16 est supérieur à l'effort de tarage, le clapet 16 est ouvert, autrement dit il autorise le passage du fluide dans le circuit 15 de dérivation.

Le clapet 16 anti-retour est un clapet passif dans le sens où il n'est pas directement piloté par une source d'énergie extérieure, électrique par exemple. Le clapet 16 anti-retour est dit normalement fermé.

Dans ce mode de réalisation, le circuit de dérivation est distinct de l'organe de détente 9. Il est par exemple constitué d'une conduite externe à l'organe de détente 9.

Afin de transformer l'énergie mécanique en énergie électrique, le dispositif de récupération d'énergie comprend encore une génératrice électrique 14 coopérant avec les moyens de transmission formés par l'arbre 11 pour convertir l'énergie mécanique produite par l'organe de détente 9 en énergie électrique.

Le dispositif de récupération d'énergie comprend encore des moyens de commande 17 de la génératrice électrique 14. Les moyens de commandes 17 peuvent se présenter sous la forme d'un calculateur équipé d'une électronique capable de réguler la vitesse de rotation de la génératrice électrique 14. La génératrice électrique 14 fait ainsi office de moyens de blocage des moyens de transmission. Les moyens de commandes 17 comprennent des moyens de détermination d'une information représentative de la puissance disponible à la source chaude. Les moyens de commandes 17 comprennent aussi des moyens de pilotage de la génératrice électrique 14 en fonction de cette information acquise.

Par exemple, à un démarrage du moteur, la puissance disponible à la ligne d'échappement peut être insuffisante. Le fluide doit donc contourner l'organe de détente 9 via le circuit 15 de dérivation. Aussi, lorsque la puissance disponible à la source chaude est inférieure à un seuil de puissance déterminé, les moyens de commande 17 pilote la génératrice électrique 14 de sorte à l'empêcher de tourner. Lorsque la rotation de la génératrice électrique 14 est bloquée, la rotation de l'organe de détente 9 est aussi bloquée et la pression du fluide 7 augmente dans la boucle 6 en amont de l'organe de détente 9 jusqu'à exercer sur le clapet 16 l'effort de tarage déterminé au-delà duquel le clapet 16 s'ouvre pour permettre le passage du fluide 7 dans le circuit 15 de dérivation.

Dès que la puissance disponible à la source chaude dépasse le seuil de puissance déterminé, les moyens de commandes 14 autorise et pilote la génératrice 14 de sorte à en autoriser la rotation. Lorsque la rotation de la génératrice électrique 14 est autorisée, la rotation de l'organe de détente 9 l'est aussi et la pression du fluide 7 dans la boucle 6 en amont de l'organe de détente 9 diminue jusqu'à ce que s'exerce sur le clapet 16 un effort inférieur à l'effort de l'effort de tarage déterminé. Le clapet 16 se ferme alors pour interdire le passage du fluide dans le circuit 15 de dérivation.

On peut aussi prévoir de prendre en compte en plus de la puissance disponible à l'échappement, l'état du fluide 7 de travail, c'est à dire sa pression et/ou sa température, pour décider du blocage en rotation ou non des moyens de transmission par la génératrice 14. Dans ce cas les moyens de commandes 17 comprennent aussi des moyens de détermination de la pression et/ ou de la température du fluide 7 de travail. Dans ce cas encore, les moyens de pilotage sont adaptés pour aussi prendre en compte la pression et la température déterminées du fluide 7, dans le pilotage de la génératrice électrique 14.

Le clapet 16 anti-retour permet au fluide 7 de travail de contourner l'organe de détente 9 lorsque le fluide 7 n'a pas encore atteint les conditions dans lesquelles il peut être exploité.

Le fait d'avoir une commande déportée au niveau des moyens de transmission permet d'implanter dans le circuit de dérivation une vanne (le clapet anti-retour 16) de conception simple et robuste.

Sur la figure 2 est présenté un mode de réalisation d'organe de détente 9' pour un dispositif de récupération d'énergie par boucle de Rankine dans lequel le circuit de dérivation est intégré à l'organe de détente 9'. L'organe de détente 9' est ici un organe de type spiro-orbital, il comprend donc une spire fixe 22 et une spire mobile 23 à la laquelle est reliée l'arbre 11 de transmission de puissance. La spire fixe 22 est emboitée dans la spire mobile 23, la spire mobile 23 étant mobile par rapport à la spire fixe 22.

L'organe de détente 9'comprend un carter 18 présentant une entrée 19 et une sortie 20 de fluide 7 de travail. Dans ce mode de réalisation, le carter 18 comprend un passage interne 21 aménagé dans l'épaisseur du carter 18. Ce passage interne 21 relie l'entrée 19 à la sortie 20 de fluide 7 de travail. Dans ce mode de réalisation, le passage interne 21 fait office de circuit de dérivation.

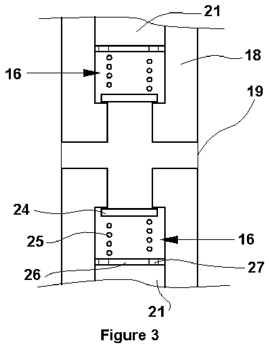

Dans ce mode de réalisation, comme le montre encore la figure 3, le clapet 16 anti-retour passif est disposé dans le passage interne 21. La figure 3 présente deux clapets 16 anti-retour, mais, un seul peut suffire.

Le clapet anti-retour 16 est taré à un effort de tarage déterminé et disposé dans le passage interne 21 de sorte que :
- lorsque l'effort du fluide 7 sur le clapet 16 est inférieur à l'effort de tarage, le clapet 16 est fermé pour interdire le passage du fluide 7 dans le passage 21 interne,
- lorsque l'effort du fluide 7 sur le clapet 16 est supérieur à l'effort de tarage, le clapet 16 est ouvert pour autoriser passage du fluide 7 dans le passage 21 interne.

A titre d'exemple, le clapet 16 anti-retour comprend un élément d'obturation 24 du passage interne destiné à isoler à étanchéité l'entrée 19 du passage interne 21, un ressort de rappel 25, dont le dimensionnement permet de régler l'effort de tarage. Le ressort vient en appui sur l'élément d'obturation 24 d'un côté et sur un support 26 servant de butée au ressort de rappel 25. Le support peut comprendre un orifice 27 pour le passage du fluide dans le passage interne 21.

Avec un tel organe de détente 9', le dispositif de récupération d'énergie présenté à la figure 1 diffère en ce que le circuit 15 de dérivation extérieur et son clapet 16 anti-retour est remplacé par le passage interne 21 équipé du clapet 16 anti-retour. Un tel mode de réalisation permet de réduire l'encombrement du dispositif de récupération d'énergie.

Avoir un circuit de dérivation intégré permet de gagner en compacité. Cette intégration n'est facilitée grâce à l'usage d'une vanne de conception simple tel que le clapet anti-retour.

Dans une variante, le passage interne 21 peut comprendre un matériau à changement de phase, qui peut être poreux, afin d'emmagasiner de la chaleur provenant du fluide de travail, lorsque celui-ci circule par le passage interne 21, c'est-à-dire lorsque l'arbre 11 est bloqué en rotation. Cela permet d'améliorer l'efficacité énergétique de l'organe de détente 9', car il subira moins de pertes thermiques.

L'invention ne se limite pas aux variantes décrites. Dans une autre variante, l'organe de détente pour dispositif de récupération à boucle de Rankine peut encore être du type à piston, à vis, turbine centrifuge ou turbine axiale. Dans une autre variante, les moyens de blocages des moyens de transmission peuvent être autres qu'une génératrice électrique. Par exemple les moyens de blocages peuvent se présenter sous la forme de moyens de freinage par friction.

## Revendications

1. Dispositif de récupération d'énergie à boucle de Rankine comprenant :
- une boucle (6) d'échange thermique avec une source chaude dans laquelle circule un fluide (7) de travail,
- un organe de détente (9) disposé dans la boucle (6) apte à transformer de l'énergie provenant de la détente du fluide (7) en énergie mécanique,
- un circuit (15) de dérivation de fluide reliant l'amont de l'organe de détente (9) à l'aval de l'organe de détente (9),
- des moyens de transmission de l'énergie mécanique produite par l'organe de détente (9),
ce dispositif étant **caractérisé en ce qu'**il comprend de plus :
- des moyens de blocage des moyens de transmission,
- des moyens de commande (17) des moyens de blocage,
- un clapet (16) anti-retour passif taré à un effort de tarage déterminé et disposé dans le circuit (15) de dérivation,
- Les moyens de commande et le clapet (16) étant conçus pour coopérer de sorte que :
lorsque la puissance disponible à la source chaude est inférieure à un seuil de puissance déterminé, les moyens de commande (17) bloquent les moyens de transmission, afin que la pression du fluide (7) dans la boucle (6) augmente jusqu'à exercer sur le clapet (16) un effort supérieur à l'effort de tarage déterminé, le clapet (16) s'ouvrant alors pour autoriser passage du fluide (7) dans le circuit (15) de dérivation.
∘ lorsque la puissance disponible à la source chaude est supérieure au seuil de puissance déterminé, les moyens de commande (17) ne bloquent pas les moyens de transmission, afin que la pression du fluide (7) dans la boucle (6) diminue jusqu'à exercer sur le clapet (16) un effort du fluide (7) sur le clapet (16) inférieur à l'effort de tarage, le clapet (16) se fermant alors pour interdire le passage du fluide (7) dans le circuit (15) de dérivation.

2. Dispositif selon la revendication 1, **caractérisé en ce que** les moyens de commande (17) comprennent des moyens de détermination d'une information représentative de la puissance disponible à la source chaude et des moyens de pilotage adaptés à piloter les moyens de blocage en fonction cette information représentative acquise.

3. Dispositif selon la revendication 1 ou la revendication 2, **caractérisé en ce qu'**il comprend une génératrice électrique (14) coopérant avec les moyens de transmission pour convertir l'énergie mécanique produite par l'organe de détente (9) en énergie électrique, la génératrice électrique (14) faisant office de moyens de blocage.

4. Dispositif selon l'une quelconque des revendications 1 à 3, **caractérisé en ce que** le circuit (15) de dérivation est distinct de l'organe de détente (9).

5. Dispositif selon l'une quelconque des revendications 1 à 3, **caractérisé en ce que** le circuit de dérivation est intégré à l'organe de détente (9').

6. Organe de détente (9') pour un dispositif de récupération d'énergie à boucle de Rankine selon la revendication 5, comprenant un carter (18), ce carter comprenant une entrée (19) et une sortie (20) de fluide (7) de travail,
cet organe de détente (9') étant **caractérisé en ce que** le carter (18) comprend :
- un passage (21) interne aménagé dans l'épaisseur du carter (18) et reliant l'entrée (19) à la sortie (20) de fluide de travail, destiné à faire office de circuit de dérivation,
- le clapet (16) anti-retour passif taré à un effort de tarage déterminé étant disposé dans le passage (21) interne de sorte que :
∘ lorsque l'effort du fluide (7) sur le clapet (16) est inférieur à l'effort de tarage, le clapet (16) est fermé pour interdire le passage du fluide (7) dans le passage (21) interne,
∘ lorsque l'effort du fluide (7) sur le clapet (16) est supérieur à l'effort de tarage, le clapet (16) est ouvert pour autoriser passage du fluide (7) dans le passage (21) interne.

7. Organe de détente (9') selon la revendication 6, **caractérisé en ce que** le passage interne (21) comprend un matériau à changement de phase.

8. Organe de détente (9') selon la revendication 6 ou la revendication 7, **caractérisé en ce qu'**il s'agit d'un organe de détente de type spiro-orbital.

9. Véhicule automobile comprenant un moteur à combustion interne relié à une ligne d'échappement (4), **caractérisé en ce qu'**il comprend un dispositif de récupération d'énergie à boucle de Rankine selon l'une quelconque des revendications 1 à 4 en contact thermique avec la ligne d'échappement (4) comme source chaude.

10. Véhicule automobile comprenant un moteur à combustion interne relié à une ligne d'échappement (4), **caractérisé en ce qu'**il comprend un dispositif de récupération d'énergie à boucle de Rankine selon la revendication 5 accouplé à la ligne d'échappement (4) comme source chaude et comprenant un organe de détente (9') selon l'une quelconque des revendications 6 à 8.

## Patentansprüche

1. Vorrichtung zur Energierückgewinnung über einen Rankine-Kreisprozess, der Folgendes umfasst:
- eine Wärmeaustauschschleife (6) mit einer Wärmequelle, in der ein Arbeitsfluid (7) zirkuliert,
- ein Spannungsorgan (9), das in der Schleife (6) angeordnet ist, das fähig ist, die Energie, die von dem Entspannen des Fluids (7) stammt, in mechanische Energie umzuwandeln,
- einen Fluidabzweigungskreislauf (15), der die stromaufwärtige Seite des Entspannungsorgans (9) mit der stromabwärtigen Seite des Entspannungsamts (9) verbindet,
- Mittel zum Übertragen der mechanischen Energie, die von dem Entspannungsorgan (9) erzeugt wird,
Vorrichtung **dadurch gekennzeichnet, dass** sie außerdem Folgendes umfasst:
- Blockierungsmittel der Übertragungsmittel,
- Steuermittel (17) der Blockierungsmittel,
- ein passives Rückschlagventil (16), das auf eine bestimmte Einstellungskraft eingestellt und in dem Fluidabzweigungskreislauf (15) angeordnet ist,
- wobei die Steuermittel und die Klappe (16) konzipiert sind, um derart zusammenzuwirken, dass,
• wenn die an der Wärmequelle verfügbare Leistung niedriger ist als ein vorbestimmter Leistungsschwellenwert, die Steuermittel (17) die Übertragungsmittel blockieren, damit der Druck des Fluids (7) in der Schleife (6) zunimmt, bis auf die Klappe (16) eine Kraft ausgeübt wird, die größer ist als die bestimmte Einstellungskraft, wobei sich die Klappe (16) öffnet, um das Durchgehen des Fluids (7) in den Fluidabzweigungskreislauf (15) zu gestatten.
• wenn die Leistung, die an der Wärmequelle verfügbar ist, größer ist als der vorbestimmte Leistungsschwellenwert, die Steuermittel (17) die Übertragungsmittel nicht blockieren, damit der Druck des Fluids (7) in der Schleife (6) abnimmt, bis auf die Klappe (16) eine Kraft des Fluids (7) auf der Klappe (16) ausgeübt wird, die niedriger ist als die Einstellungskraft, wobei sich die Klappe (16) daher schließt, um die Passage des Fluids (7) in den Fluidabzweigungskreislauf (15) zu verhindern.

2. Vorrichtung nach Anspruch 1, **dadurch gekennzeichnet, dass** die Steuermittel (17) Mittel zum Bestimmen einer Information umfassen, die für die Leistung repräsentativ ist, die an der Wärmequelle verfügbar ist, und Mittel zum Steuern, die angepasst sind, um die Blockierungsmittel in Abhängigkeit von dieser erfassten repräsentativen Information zu steuern.

3. Vorrichtung nach Anspruch 1 oder 2, **dadurch gekennzeichnet, dass** sie einen Stromerzeuger (14) umfasst, der mit den Übertragungsmitteln zusammenwirkt, um die von dem Entspannungsorgan (9) erzeugte mechanische Energie in elektrische Energie umzuwandeln, wobei der Stromerzeuger (14) Blockierungsmittel bildet.

4. Vorrichtung nach einem der Ansprüche 1 bis 3, **dadurch gekennzeichnet, dass** der Fluidabzweigungskreislauf (15) von dem Entspannungsorgan (9) getrennt ist.

5. Vorrichtung nach einem der Ansprüche 1 bis 3, **dadurch gekennzeichnet, dass** der Abzweigungskreislauf in das Entspannungsorgan (9') integriert ist.

6. Entspannungsorgan (9') für eine Energierückgewinnungsvorrichtung über einen Rankine-Kreisprozess nach Anspruch 5, das ein Gehäuse (18) umfasst, wobei das Gehäuse einen Eingang (19) und einen Ausgang (20) von Arbeitsfluid (7) umfasst,
Entspannungsorgan (9') **dadurch gekennzeichnet, dass** das Gehäuse (18) Folgendes umfasst:
- eine interne Passage (21), die in der Stärke des Gehäuses (18) eingerichtet ist und den Eingang (19) mit dem Ausgang (20) von Arbeitsfluid verbindet, die dazu bestimmt ist, als Abzweigkreislauf zu dienen,
- wobei das passive Rückschlagventil (16), das auf eine bestimmte Einstellungskraft eingestellt ist, in der internen Passage (21) derart angeordnet ist, dass:
• wenn die Kraft des Fluids (7) auf dem Ventil (16) niedriger ist als die Einstellungskraft, das Ventil (16) geschlossen ist, um das Durchgehen des Fluids (7) in der internen Passage (21) zu verhindern,
• wenn die Kraft des Fluids (7) auf dem Ventil (16) größer ist als die Einstellungskraft, das Ventil (16) offen ist, um das Durchgehen des Fluids (7) in der internen Passage (21) zu gestatten.

7. Entspannungsorgan (9') nach Anspruch 6, **dadurch gekennzeichnet, dass** die interne Passage (21) ein Phasenwechselmaterial umfasst.

8. Entspannungsorgan (9') nach Anspruch 6 oder Anspruch 7, **dadurch gekennzeichnet, dass** es sich um ein Entspannungsorgan des Scroll-Typs handelt.

9. Kraftfahrzeug, das eine Brennkraftmaschine umfasst, die mit einem Auspuffstrang (4) verbunden ist, **dadurch gekennzeichnet, dass** es eine Energierückgewinnungsvorrichtung über einen Rankine-Kreisprozess nach einem der Ansprüche 1 bis 4 in Wärmeberührung mit dem Abgasstrang (4) als Wärmequelle umfasst.

10. Kraftfahrzeug, das eine Brennkraftmaschine umfasst, die mit einem Abgasstrang (4) verbunden ist, **dadurch gekennzeichnet, dass** es eine Energierückgewinnungsvorrichtung über einen Rankine-Kreisprozess nach Anspruch 5 umfasst, der mit dem Abgasstrang (4) als Wärmequelle gekoppelt ist und ein Entspannungsorgan (9') nach einem der Ansprüche 6 bis 8 umfasst.

## Claims

1. A device for recovering energy with rankine loop including:
- a heat exchange loop (6) with a heat source in which a working fluid (7) circulates,
- an expansion member (9) disposed in the loop (6) able to transform energy originating from the expansion of the fluid (7) into mechanical energy,
- a bypass circuit (15) of fluid connecting the upstream of the expansion member (9) to the downstream of the expansion member (9),
- means for transmission of the mechanical energy produced by the expansion member (9),
this device being **characterized in that** it includes in addition:
- blocking means of the transmission means,
- control means (17) of the blocking means,
- a passive non-return valve (16) calibrated to a specified calibration force and disposed in the bypass circuit (15),
- the control means and the valve (16) being designed to cooperate such that:
∘ when the power available to the heat source is less than a specified power threshold, the control means (17) block the transmission means, such that the pressure of the fluid (7) in the loop (6) increases until exerting on the valve (16) a force greater than the specified calibration force, the valve (16) then opening to permit passage of the fluid (7) in the bypass circuit (15),
∘ when the power available to the heat source is greater than the specified power threshold, the control means (17) do not block the transmission means, so that the pressure of the fluid (7) in the loop (6) reduces until exerting on the valve (16) a force of the fluid (7) on the valve (16) less than the calibration force, the valve (16) then closing to prohibit the passage of the fluid (7) in the bypass circuit (15).

2. The device according to Claim 1, **characterized in that** the control means (17) include means for specifying information representative of the power available to the heat source and control means able to control the blocking means as a function of this acquired representative information.

3. The device according to Claim 1 or Claim 2, **characterized in that** it includes an electric generator (14) cooperating with the transmission means to convert the mechanical energy produced by the expansion member (9) into electrical energy, the electric generator (14) acting as blocking means.

4. The device according to any one of Claims 1 to 3, **characterized in that** the bypass circuit (15) is distinct from the expansion member (9).

5. The device according to any one of Claims 1 to 3, **characterized in that** the bypass circuit is integrated to the expansion member (9').

6. An expansion member (9') for a device for recovering energy with rankine loop according to Claim 5, including a casing (18), this casing including an inlet (19) and an outlet (20) for working fluid (7),
this expansion member (9') being **characterized in that** the casing (18) includes:
- an internal passage (21) arranged in the thickness of the casing (18) and connecting the inlet (19) to the outlet (20) for working fluid, intended to act as bypass circuit,
- the passive non-return valve (16) calibrated to a specified calibration force being disposed in the internal passage (21) such that:
∘ when the force of the fluid (7) on the valve (16) is less than the calibration force, the valve (16) is closed to prohibit the passage of the fluid (7) in the internal passage (21) ,
∘ when the force of the fluid (7) on the valve (16) is greater than the calibration force, the valve (16) is open to permit passage of the fluid (7) in the internal passage (21).

7. An expansion member (9') according to Claim 6, **characterized in that** the internal passage (21) includes a phase change material.

8. The expansion member (9') according to Claim 6 or Claim 7, **characterized in that** it is an expansion member of the spiro-orbital type.

9. A motor vehicle including an internal combustion engine connected to an exhaust line (4), **characterized in that** it includes a device for recovering energy with rankine loop according to any one of Claims 1 to 4 in thermal contact with the exhaust line (4) as heat source.

10. A motor vehicle including an internal combustion engine connected to an exhaust line (4), **characterized in that** it includes a device for recovering energy with rankine loop according to Claim 5 coupled to the exhaust line (4) as heat source and including an expansion member (9') according to any one of Claims 6 to 8.
